(19) Europäisches Patentamt
European Patent Office
Office européen des brevets

(11) **EP 3 869 285 B1**

(12) **FASCICULE DE BREVET EUROPEEN**

(45) Date de publication et mention
de la délivrance du brevet:
**30.03.2022 Bulletin 2022/13**

(21) Numéro de dépôt: **21153467.2**

(22) Date de dépôt: **26.01.2021**

(51) Classification Internationale des Brevets (IPC):
**G05B 23/02** *(2006.01)* **G06Q 50/06** *(2012.01)*
**H02J 3/00** *(2006.01)*

(52) Classification Coopérative des Brevets (CPC):
**H02J 3/00; G05B 23/0248; G05B 23/0278;**
**G06Q 50/06;** H02J 2203/20; Y02E 60/00;
Y04S 10/52; Y04S 40/20

(54) **DÉTERMINATION D'UN ÉTAT DE FIABILITÉ D'UN RÉSEAU ÉLECTRIQUE**

BESTIMMUNG EINES ZUVERLÄSSIGKEITSZUSTANDS EINES STROMNETZES

DETERMINATION OF A RELIABILITY STATE OF AN ELECTRICAL NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.02.2020 FR 2001644**

(43) Date de publication de la demande:
**25.08.2021 Bulletin 2021/34**

(73) Titulaire: **Schneider Electric Industries SAS
92500 Rueil-Malmaison (FR)**

(72) Inventeurs:
• **CHEVALIER, Marcel
38000 Grenoble (FR)**
• **BUCHSBAUM, Laurent
38640 Claix (FR)**

(74) Mandataire: **Schneider Electric
Service Propriété Industrielle
35, rue Joseph Monier
92500 Rueil-Malmaison (FR)**

(56) Documents cités:
**CN-A- 107 688 880 CN-A- 110 276 532
FR-A1- 2 920 893 FR-A1- 3 044 787
US-B1- 6 321 187**

• **SENON G E: "EVALUATION DES
PERFORMANCES D'ARCHITECTURES
MULTI-ASI : FIABILITE ET DISPONIBILITE",
REVUE GENERALE DE L'ELECTRICITE, RGE.
PARIS, FR, no. 11, 1 décembre 1992 (1992-12-01),
pages 39-44, XP000328978, ISSN: 0035-3116**

## Description

### Domaine technique

La présente invention concerne un procédé de détermination d'un état de fiabilité d'un réseau électrique.

### Technique antérieure

La fiabilité et la qualité de fonctionnement d'un réseau électrique sont essentielles pour assurer la transmission et la distribution d'énergie électrique depuis des centres de production vers des consommateurs d'électricité.

A cet effet, on connait de nombreuses méthodes et outils d'étude de risques afin d'analyser la fiabilité, la disponibilité, la sécurité et la maintenabilité du réseau électrique. Ces méthodes permettent de modéliser de manière systématique les interactions entre les différents éléments composant le réseau électrique, afin d'étudier un éventuel défaut du réseau électrique et d'en déduire ses différents dysfonctionnements.

A titre d'exemple, le document « Fault Tree-Based Reliability Assessment of a 132-kV Transmission Line Protection Scheme » Samuel et al., American Journal of Engineering Research, 2013, Volume 2, Issue 10, pages 100-106, décrit une étude de cas dans laquelle une défaillance générale d'une ligne transmission 132 kV est analysée par la réalisation d'un arbre de défaillance.

La construction d'un tel arbre de défaillance est effectuée en partant d'un événement indésirable, puis en imaginant les évènements intermédiaires possibles expliquant l'évènement indésirable, puis en considérant chaque événement intermédiaire comme un nouvel événement indésirable. Ainsi, l'arbre de défaillance est réalisé en descendant progressivement dans l'arbre jusqu'aux évènements de base et en imaginant les causes possibles de chaque événement au niveau considéré.

Cette méthode, connue en soi, peut toutefois s'avérer longue à mettre en œuvre en ce qu'elle nécessite, dès sa mise en œuvre, la prise en compte d'une représentation complète du réseau électrique.

En outre, cette méthode est plus particulièrement adaptée à une défaillance générale, tel que décrite dans le document mentionnée ci-dessus concernant une ligne de transmission, mais est moins adaptée lorsqu'il s'agit de connaitre les causes de défaillance à un autre emplacement donné du réseau électrique.

Le document FR 2 920 893 A1 enseigne un procédé pour l'analyse de la fiabilité de dispositifs et installations techniques tels que des circuits électriques dans lequel le circuit électrique à analyser est modélisé et, ensuite, un état de fiabilité est déterminé à partir des valeurs d'indisponibilités respectivement associées à des composants électriques d'un sous-ensemble du circuit électrique.

Aussi, l'invention vise à proposer un procédé de détermination d'un état de fiabilité d'un réseau électrique particulièrement simple à mettre en œuvre.

### Résumé

L'invention vient améliorer la situation.

Il est proposé un procédé de détermination d'un état de fiabilité d'un réseau électrique, le réseau électrique comprenant une pluralité d'appareils électriques interconnectés les uns aux autres, le réseau électrique étant modélisé par une représentation unifilaire, le procédé comprenant les étapes suivantes :

> a) identification d'un événement indésirable à un emplacement donné du réseau électrique, l'évènement indésirable correspondant à un état critique du réseau électrique entrainant une indisponibilité, temporaire ou permanente, partielle ou totale, de l'énergie électrique au niveau de l'emplacement donné ;
> b) parcours à partir de l'emplacement donné d'au moins un sous-ensemble comprenant des appareils électriques de la pluralité d'appareils électriques du réseau électrique;
> c) identification d'un appareil électrique du sous-ensemble du réseau électrique parcouru à l'étape b) ;
> d) détermination d'une liste d'évènements redoutés associés à l'appareil électrique identifié pouvant entrainer l'évènement indésirable, les évènements redoutés correspondant respectivement à des causes susceptibles d'entrainer, seules ou en combinaison, l'évènement indésirable ;
> e) détermination d'une valeur d'indisponibilité totale associée à l'appareil électrique identifié prenant en compte ladite liste d'évènements redoutés, les taux d'indisponibilité et les temps de réparation respectivement associés à chaque événement redouté de la liste d'événements redoutés ;
> f) répétition des étapes b) à e), le procédé étant interrompu une fois qu'un nombre prédéfini supérieur ou égal à deux appareils électriques de protection ont été parcourus dans le sous-ensemble ; et
> g) calcul d'un état de fiabilité du réseau électrique à partir des valeurs d'indisponibilité totales respectivement associées aux appareils électriques parcourus.

De cette façon, on obtient une méthode simple et facile à mettre en œuvre pour déterminer les causes d'une défaillance en tout emplacement d'un réseau électrique, ainsi que la fiabilité qui peut être attendue.

Selon une réalisation, au moins un appareil électrique du réseau électrique est choisi parmi un transformateur, un interrupteur, un disjoncteur, un contacteur, un sectionneur, un jeu de barres, une batterie, un relais de protection, un équipement de surveillance, un équipement de contrôle et un équipement de télécommunication.

Selon une autre réalisation, le réseau électrique comprend au moins un appareil électrique réel et au moins un appareil électrique virtuel, l'appareil électrique virtuel étant configuré pour modéliser une relation entre des éléments du réseau électrique, et plus particulièrement entre des éléments critiques du réseau électrique pour son fonctionnement.

Selon une autre réalisation, le procédé est interrompu une fois que l'on identifie un appareil électrique virtuel à l'étape c) du procédé.

Ainsi, seules les portions critiques du réseau sont prises en compte par le procédé, ce qui permet d'analyser rapidement la fiabilité du réseau électrique.

Selon une autre réalisation, l'emplacement donné du réseau électrique correspond à un emplacement d'un jeu de barres.

Selon une autre réalisation, le parcours du sous-ensemble est réalisé depuis l'emplacement donné en amont, c'est-à-dire vers au moins une source d'énergie électrique du réseau électrique, et/ou en aval, c'est-à-dire vers au moins un charge électrique du réseau électrique.

Selon un autre aspect, il est proposé un programme d'ordinateur comprenant des instructions qui, lorsque le programme est exécuté par un processeur, conduisent à mettre en œuvre le procédé selon l'invention.

Selon un autre aspect, il est proposé un dispositif de traitement sur lequel est enregistré un programme d'ordinateur comprenant des instructions pour la mise en œuvre du procédé selon l'invention.

**Brève description des dessins**

D'autres caractéristiques, détails et avantages apparaîtront à la lecture de la description détaillée ci-après, et à l'analyse des dessins annexés, sur lesquels :

FIG. 1

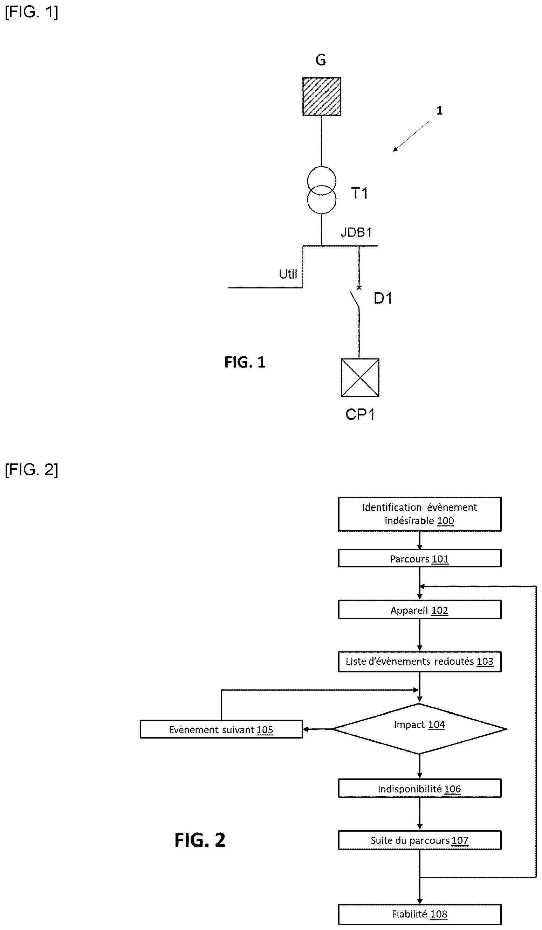

[FIG. 1] est un schéma unifilaire simplifié d'un réseau électrique.

FIG. 2
[FIG. 2] est une représentation schématique d'un mode de réalisation du procédé selon l'invention.

FIG. 3

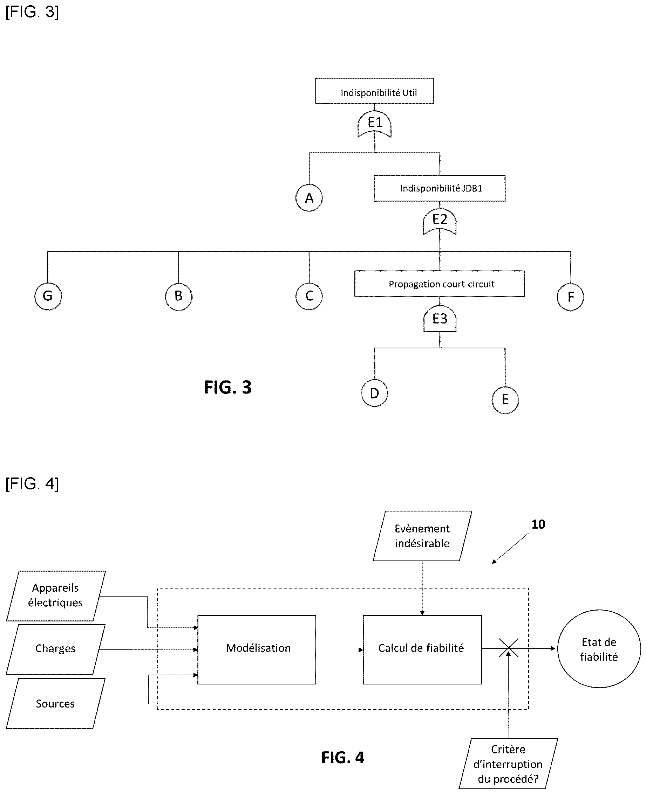

[FIG. 3] est une représentation d'un arbre de défaillance obtenue en mettant en œuvre le procédé selon l'invention pour le schéma unifilaire de la [FIG. 1].

FIG. 4
[FIG. 4] est une représentation par bloc d'un dispositif de traitement configuré pour mettre en œuvre le procédé selon l'invention.

**Description des modes de réalisation**

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

**Réseau électrique**

La [FIG. 1] illustre un exemple d'un schéma unifilaire d'un réseau électrique 1, notamment moyenne et/ou haute tension.

Dans ce qui suit, les termes « moyenne tension » et « haute tension » sont utilisés dans leur acceptation habituelle, à savoir que le terme « moyenne tension » désigne une tension qui est supérieure à 1 000 volts en courant alternatif et à 1 500 volts en courant continu mais qui ne dépasse pas 52 000 volts en courant alternatif et 75 000 volts en courant continu, tandis que le terme « haute tension » désigne une tension qui est strictement supérieure à 52 000 volts en courant alternatif et à 75 000 volts en courant continu.

Le réseau électrique permet la transmission et la distribution d'énergie électrique, en particulier en connectant au moins une source d'énergie électrique G à une ou plusieurs charges CP1. La source d'énergie électrique G peut être de tout type, notamment fossile ou renouvelable.

Entre la source d'énergie électrique G et les charges CP1, le réseau électrique comprend une pluralité d'appareils électriques, éventuellement répartis dans des sous-stations ou postes électriques (non illustrés).

Les appareils électriques permettent des fonctions de mise sous ou hors tension, de commande, de mesure et/ou de protection de tout ou partie du réseau électrique.

De façon non exhaustive et purement illustrative, un appareil électrique peut être choisi parmi un transformateur, un interrupteur, un disjoncteur, un contacteur, un sectionneur, un jeu de barres, une batterie, un relais de protection, un équipement de surveillance, un équipement de contrôle et un équipement de télécommunication.

Toutefois, tout appareil électrique, connu en soi et ayant une application dans un réseau électrique, est envisageable selon l'invention.

Par souci de simplification et de compréhension, l'exemple de schéma unifilaire 1 illustré sur la [FIG. 1] comprend un nombre limité d'appareils électriques. En particulier, la [FIG. 1] illustre uniquement un transformateur T1, deux jeux de barres Util, JDB1 et un disjoncteur D1. Toutefois, l'invention est généralisable à des réseaux électriques plus complexes et comprenant un nombre plus important de composants électriques. Selon certains exemples, le réseau électrique peut comprendre plus de cent, voir plus de mille appareils électriques. De la même façon, le réseau électrique peut comprendre un nombre plus importants de source d'énergie électrique et de charges connectées.

A partir du schéma unifilaire 1 du réseau électrique tel qu'illustré sur la [FIG. 1], l'invention vise à déterminer une état de fiabilité au niveau d'un emplacement donné du réseau électrique.

**Procédé**

Le procédé selon l'invention est décrit dans la suite en lien avec la [FIG. 2].

Préalablement à la mise en œuvre du procédé, il est nécessaire de modéliser une représentation, notamment unifilaire, du réseau électrique que l'on souhaite étudier.

Lors de la modélisation, on attribue à chaque emplacement ou nœud du réseau un ou plusieurs paramètres permettant de simuler son état de fonctionnement. Un nœud du réseau peut ainsi comprendre un ou plusieurs appareils électriques, des sources ou des charges électriques.

Un appareil électrique pris en compte lors de la modélisation peut être un appareil réel ou virtuel.

Par « appareil électrique virtuel », on comprend un appareil qui n'a pas d'existence physique dans le réseau électrique mais dont la modélisation permet, lors de la mise en œuvre du procédé, de simplifier l'étude de l'état de fiabilité. A titre d'exemple, un appareil électrique virtuel peut permettre de relier électriquement et virtuellement différents nœuds du réseau électrique.

Dans une première étape 100 du procédé, on identifie tout d'abord un événement indésirable, correspondant à une défaillance ou un disfonctionnement à un emplacement donné du réseau électrique.

Par « emplacement donné», on comprend tout point du réseau électrique, correspondant notamment à l'emplacement d'un appareil ou d'une charge électrique. Un emplacement donné peut notamment être situé à un emplacement différent de celui de/des sources d'énergies électriques.

L'emplacement donné peut notamment être l'emplacement d'un jeu de barres d'un poste électrique, permettant un raccordement de différentes charges électriques et une ramification du réseau électrique.

Par « défaillance ou disfonctionnement », on comprend un état critique du réseau électrique entrainant une indisponibilité, temporaire ou permanente, partielle ou totale, de l'énergie électrique au niveau de l'emplacement donné.

Une fois l'évènement indésirable identifié, le procédé consiste à parcourir le schéma unifilaire à partir de l'emplacement donné (étape 101).

En particulier, le schéma unifilaire est parcouru depuis l'emplacement donné vers l'amont et/ou vers l'aval.

Par « vers l'amont et/ou vers l'aval », on comprend respectivement que le schéma unifilaire est parcouru depuis l'emplacement donné respectivement vers la source d'énergie électrique et/ou vers les charges électriques.

A chaque fois qu'un appareil électrique se trouve sur le parcours du schéma unifilaire (étape 102), le procédé comprend une pluralité d'étapes permettant de déterminer une valeur d'indisponibilité associée à l'appareil électrique considéré.

A cet effet, à chaque appareil électrique, on associe un ou plusieurs évènements redoutés (étape 103). Chaque événement redouté correspond à une cause menant à une défaillance ou disfonctionnement pour l'appareil considéré et susceptible d'entrainer, seul ou en combinaison, l'évènement indésirable.

A titre d'exemple, les évènements redoutés pour un disjoncteur peuvent être lié à un disfonctionnement mécanique, tel qu'un défaut d'isolation, un défaut d'ouverture ou un déclenchement intempestif.

Les évènements redoutés peuvent également être lié à un disfonctionnement ou d'une indisponibilité au niveau d'un autre appareil électrique disposé en amont ou en aval de l'appareil électrique considéré. Ainsi, un court-circuit en aval de l'appareil électrique est susceptible de se propager dans le réseau électrique et d'entrainer en amont une indisponibilité. Selon un autre exemple, un disfonctionnement d'une source d'énergie électrique en amont peut entrainer une indisponibilité en aval si aucune autre source n'est disponible pour fournir l'énergie nécessaire. Aussi, le parcours du réseau unifilaire, en amont ou en aval, peut dépendre en fonction de l'évènement indésirable considéré.

On détermine donc si chaque événement redouté associé à l'appareil considéré est susceptible d'entrainer, seule ou en combinaison, l'évènement indésirable (étape 104).

Si l'évènement redouté est susceptible d'entrainer l'évènement indésirable, celui-ci est pris en compte dans le calcul de la valeur d'indisponibilité de l'appareil électrique considéré. Le procédé est notamment répété pour prendre en compte tous les évènements redoutés (étape 105).

Une valeur d'indisponibilité d'un événement redouté j peut être calculé selon différents paramètres, notamment en fonction d'un temps moyen de fonctionnement avant défaillance d'un appareil électrique (MTTF, pour « mean-time to failure » en anglais). En particulier, une valeur d'indisponibilité d'un événement redouté j peut être calculée, en première approximation, comme étant le produit d'un taux d'indisponibilité $t_{ind}$ et d'un temps de réparation $T_{repair}$ pour un événement redouté j, de telle sorte que :

[Math. 1]

$$Ind_j = t_{ind,j} \times T_{repair,j}$$

Le taux de défaillance $t_{ind}$ correspond à la probabilité d'occurrence de l'évènement redouté.

Le temps de réparation $T_{repair}$ correspond au temps nécessaire pour réparer la défaillance ou le disfonctionnement de l'appareil électrique. Le temps de réparation $T_{repair}$ peut dépendre de paramètres locaux, tels que le type d'appareil électrique considéré, sa localisation dans le réseau électrique, les politiques de réparations prévues, l'obtention de pièces de rechanges pour réparation, les possibilités de reconfiguration du réseau électrique, etc.

Le temps de réparation $T_{repair}$ peut ainsi varier significativement en fonction de l'appareil électrique considéré, notamment si l'appareil doit être totalement remplacé ou simplement soumis à une maintenance pour être de nouveau opérationnel.

On obtient une valeur d'indisponibilité totale $ind^i_{total}$ associée à un appareil électrique i pour l'ensemble des évènements redoutés j (étape 106).

La valeur d'indisponibilité totale $ind^i_{total}$ peut notamment être égale à la somme des valeurs d'indisponibilité respectivement de chaque événement redouté j associé à l'appareil électrique i, de telle sorte que :

[Math. 2]

$$Ind^i_{total} = \sum_{j=1}^{n} Ind_j$$

Une fois la valeur d'indisponibilité totale calculée pour l'appareil électrique i, le schéma unifilaire est parcouru jusqu'au prochain appareil électrique i+1 (étape 107), à savoir le prochain appareil électrique i+1 relié électriquement à l'appareil électrique i. En cas de nouvel appareil électrique, les étapes 102 à 107 sont alors répétées.

Lorsqu'un même appareil électrique est parcouru plusieurs fois, la valeur d'indisponibilité totale n'est pas nécessairement recalculée mais peut être considérée comme égale à celle calculée pour l'appareil électrique identique précédemment parcouru.

Le procédé selon l'invention peut être interrompu en fonction d'un ou plusieurs critères d'interruption, qui permettent de prendre en compte seulement une portion du réseau électrique et ainsi limiter le besoin et le temps de calcul.

Selon une réalisation, le procédé peut être interrompu une fois que l'on parcourt un appareil électrique virtuel, et non pas un appareil électrique réel. En effet, bien qu'une élément virtuel soit modélisé dans le schéma électrique pris en compte, un appareil virtuel n'est pas susceptible de propager la défaillance ou disfonctionnement du réseau électrique.

Selon une autre réalisation, le procédé peut être interrompu une fois qu'un nombre prédéfini, par exemple supérieur ou égal à deux, d'appareils électriques de protection ont été parcourus sans atteindre de source d'énergie électrique. Cela permet de limiter le temps de calcul nécessaire pour mettre en œuvre le procédé tout en écartant la suite du parcours qui aurait un impact négligeable sur le calcul de fiabilité final. Un appareil de protection peut être de type disjoncteur, interrupteur, ou plus généralement tout appareil permettant une coupure du courant, et ainsi d'isoler une portion du réseau électrique.

Le nombre d'appareils électriques de protection à parcourir jusqu'à l'interruption du procédé peut être plus élevé, notamment pour des applications nécessitant une précision de la fiabilité plus importante.

On obtient ainsi une valeur d'indisponibilité totale pour chaque appareil électrique. Il est ensuite possible de calculer une fiabilité globale du réseau électrique (étape 108). La fiabilité globale, ou l'état de fiabilité du réseau électrique peut ainsi être une mesure de l'aptitude du réseau électrique à fournir une énergie électrique demandée. Plus particulièrement, cette fiabilité globale peut ainsi être une probabilité de n'avoir aucune défaillance ou disfonctionnement pendant une durée déterminée pour le sous-ensemble considéré, en fonction de la valeur d'indisponibilité de chacun des appareils électriques. Basée sur cette fiabilité globale, il est possible de mettre en œuvre des actions correctives ou de maintenance.

Le procédé selon l'invention est ainsi réalisé « de proche en proche », en analysant les appareils électriques reliés entre eux, successivement les uns après les autres en parcourant le schéma unifilaire depuis l'emplacement donné.

Le procédé est susceptible de parcourir uniquement un sous-ensemble du schéma unifilaire spécifique à l'événement indésirable considéré. Il n'est donc pas nécessaire de parcourir l'ensemble du schéma unifilaire. Par « sous-ensemble », on entend donc une portion du réseau électrique, comprenant des appareils électriques reliés électriquement entre eux.

La [FIG. 3] est une représentation graphique en lien avec le schéma unifilaire de la [FIG. 1]. Plus précisément, la [FIG. 3] est un arbre de défaillances (ADD), c'est-à-dire une technique d'ingénierie utilisée dans les études de sécurité et de fiabilité de systèmes statiques.

Un arbre de défaillances consiste à représenter graphiquement les combinaisons possibles d'événements qui permettent la réalisation d'un événement indésirable prédéfini. Une telle représentation graphique met donc en évidence les relations de cause à effet.

De façon connue en soi, l'arbre de défaillance comprend des connecteurs logiques (ou portes logiques) qui forment les liaisons entre les différentes branches et/ou événements. Les connecteurs fonctionnent comme suit :

OU : l'événement en sortie/supérieur survient si un, au moins, des événements en entrée/inférieur survient/est présent ;

ET : l'événement en sortie/supérieur survient seulement si tous les événements en entrée/inférieur surviennent/sont présents (combinaison de défaillance également appelée « couple ») ; et

K/N : sous la forme d'un vote majoritaire, l'événement en sortie/supérieur survient si au moins K (c'est un entier qui sert à paramétrer le comportement de la porte) parmi les N événements en entrée/inférieurs surviennent/sont présents.

Selon le mode de réalisation représenté sur la [FIG. 3], l'évènement indésirable E1 consiste en une indisponibilité de l'énergie électrique au niveau du jeu de barres Util.

Les évènement redoutés associé au jeu de barres Util sont une défaillance du jeu de barres Util, A et une absence d'alimentation électrique du jeu de barres JDB1, E2. Les deux évènements redoutés A et E2 étant indépendants (relié par un connecteur de type « OU »), on obtient alors :

[Math. 3]

$$Ind_{Util} = Ind_A + Ind_{E2}$$

Le schéma unifilaire est également parcouru en amont jusqu'au jeu de barres JDB1.

Les évènements redoutés associés au jeu de barres JDB1 sont une défaillance du disjoncteur D1, G, une défaillance du jeu de barres JDB1, B, une défaillance du transformateur T1, C, la propagation d'un court-circuit depuis l'aval E3 et une indisponibilité de l'énergie électrique pour le réseau électrique F.

[Math. 4]

$$Ind_{JDB1} = Ind_{E2} = Ind_G + Ind_B + Ind_C + Ind_{E3} + Ind_F$$

L'événement E3 relatif à la propagation d'un court-circuit provient de deux évènements inférieurs, à savoir la non-ouverture du disjoncteur D1, D, et un court-circuit sur la charge électrique CP1, E. En particulier, les deux évènements D et E étant dépendants l'un de l'autre (relié par un connecteur de type « ET »), on obtient alors :

[Math. 5]

$$Ind_{E3} = Ind_D \times Ind_E$$

Le schéma unifilaire peut ensuite être parcouru en amont jusqu'au transformateur T1 en listant l'ensemble des évènements redoutés associés au transformateur (défaillance du transformateur et absence d'alimentation électrique du jeu de barres) et ainsi de suite jusqu'à la source d'énergie électrique ou jusqu'à un critère d'interruption.

Le schéma unifilaire peut être enfin parcouru en aval jusqu'à la charge électrique CP1 en listant l'ensemble des évènements redoutés associé à chaque appareil électrique pouvant mener à l'évènement indésirable.

Ces autres évènements ne sont cependant pas pris en compte dans l'arbre de défaillance de la [FIG. 3].

Une fois les évènements redoutés identifiés pour chacun des appareils électriques (uniquement pour les jeux de barres Util et JDB1 sur l'exemple illustré par la [FIG. 3]), on peut calculer une valeur caractérisant l'état de fiabilité du réseau électrique :

[Math. 6]

$$Ind_{util} = Ind_{E1} = Ind_A + Ind_G + Ind_B + Ind_C + Ind_D \times Ind_E + Ind_F$$

Il est également possible de déterminer une criticité associée à l'évènement indésirable, par exemple en utilisant l'Analyse des Modes de Défaillance, de leurs Effets et de leur Criticité (AMDEC). En fonction de la valeur de criticité obtenu, il peut être prévu d'effectuer des actions correctives sur le réseau électrique, en traitant en priorité les causes des évènements redoutés présentant les plus fortes valeurs de criticités.

**Dispositif de traitement**

Afin de mettre en œuvre le procédé décrit ci-dessus, l'invention concerne également un dispositif de traitement 10 illustré sur la [FIG. 4], tel qu'un ordinateur ou tout autre moyen disposant de capacité de calcul, au moyen notamment d'un processeur. Le dispositif de traitement 10 peut également comprendre une interface graphique (« Graphical User Interface » en anglais) ou une interface texte (« Textual User Interface » en anglais) permettant une interaction avec un utilisateur.

Avant la mise en œuvre du procédé, il est possible pour l'utilisateur de réaliser, via un bloc de modélisation, une représentation graphique sous la forme d'un schéma unifilaire du réseau électrique. Le schéma unifilaire peut être stocké dans le dispositif de traitement 10, par exemple sous la format d'un fichier XML.

Le schéma unifilaire est constitué de différents composants, stockés dans une base de données du dispositif de traitement 10 ou d'un serveur déporté. Les composants sont choisis parmi les appareils électriques, les sources et les charges électriques et disposés au niveau des nœuds du réseau électriques. A chaque appareil électrique sont assignés des modes de défaillance, correspondant aux évènements redoutés ainsi qu'aux taux d'indisponibilité et temps de réparation associés.

A partir du schéma unifilaire du réseau modélisé, il est possible de déterminer la valeur caractérisant l'état de fiabilité du réseau électrique via un bloc de calcul. Le bloc de calcul prend en compte l'événement indésirable considéré et met en œuvre les étapes du procédé tel que décrites précédemment.

Le bloc de calcul, dont le procédé éventuellement interrompu par un critère d'interruption, permet en sortie de donner l'état de fiabilité du réseau électrique.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

En particulier, bien que le procédé ait été décrit pour un réseau électrique, il est applicable à d'autres types de réseau permettant le transport et la distribution, tel qu'un réseau hydraulique, pneumatique, ou autres, pour lesquels la détermination d'un état de fiabilité du réseau est nécessaire.

**Revendications**

1.  Procédé de détermination d'un état de fiabilité d'un réseau électrique (1), le réseau électrique comprenant une pluralité d'appareils électriques (T1, Util, JDB1, D1) interconnectés les uns aux autres, le réseau électrique étant modélisé par une représentation unifilaire, le procédé comprenant les étapes suivantes :

a) identification d'un évènement indésirable à un emplacement donné du réseau électrique, l'évènement indésirable correspondant à un état critique du réseau électrique entrainant une indisponibilité, temporaire ou permanente, partielle ou totale, de l'énergie électrique au niveau de l'emplacement donné ;

b) parcours à partir de l'emplacement donné d'au moins un sous-ensemble comprenant des appareils électriques de la pluralité d'appareils électriques du réseau électrique ;

c) identification d'un appareil électrique du sous-ensemble du réseau électrique parcouru à l'étape b) ;

d) détermination d'une liste d'évènements redoutés associés à l'appareil électrique identifié pouvant entrainer l'événement indésirable, les évènements redoutés correspondant respectivement à des causes menant à une défaillance ou dysfonctionnement pour l'appareil électrique identifié et susceptibles d'entrainer, seules ou en combinaison, l'évènement indésirable ;

e) détermination d'une valeur d'indisponibilité totale associée à l'appareil électrique identifié prenant en compte les taux d'indisponibilité et les temps de réparation respectivement associés à chaque évènement redouté de la liste d'événements redoutés ;

f) répétition des étapes b) à e), le procédé étant interrompu une fois qu'un nombre prédéfini supérieur ou égal à deux appareils électriques de protection ont été parcourus dans le sous-ensemble ; et

g) calcul d'un état de fiabilité du réseau électrique à partir des valeurs d'indisponibilité totales respectivement associées aux appareils électriques parcourus.

2. Procédé selon la revendication 1, dans lequel au moins un appareil électrique du réseau électrique est choisi parmi un transformateur, un interrupteur, un disjoncteur, un contacteur, un sectionneur, un jeu de barres, une batterie, un relais de protection, un équipement de surveillance, un équipement de contrôle et un équipement de télécommunication.

3. Procédé selon l'une quelconque des revendications précédentes, dans lequel le réseau électrique comprend au moins un appareil électrique réel et au moins un appareil électrique virtuel, l'appareil électrique virtuel étant configuré pour modéliser une relation entre des éléments du réseau électrique.

4. Procédé selon la revendication 3, dans lequel le procédé est interrompu une fois que l'on identifie un appareil électrique virtuel à l'étape c) du procédé.

5. Procédé selon l'une quelconque des revendications précédentes, dans lequel l'emplacement donné du réseau électrique correspond à un emplacement d'un jeu de barres.

6. Procédé selon l'une quelconque des revendications précédentes, dans lequel le parcours du sous-ensemble est réalisé depuis l'emplacement donné en amont, c'est-à-dire vers au moins une source d'énergie électrique du réseau électrique, et/ou en aval, c'est-à-dire vers au moins un charge électrique du réseau électrique.

7. Programme d'ordinateur comprenant des instructions qui, lorsque le programme est exécuté par un processeur, conduisent à mettre en œuvre le procédé selon l'une des revendications 1 à 6.

8. Dispositif de traitement sur lequel est enregistré un programme d'ordinateur comprenant des instructions pour la mise en œuvre du procédé selon l'une des revendications 1 à 6.

**Patentansprüche**

1. Verfahren zur Bestimmung eines Zuverlässigkeitszustands eines Stromnetzes (1), wobei das Stromnetz eine Vielzahl miteinander verbundener elektrischer Geräte (T1, Util, JDB1, D1) enthält, wobei das Stromnetz durch eine Eindrahtdarstellung modellisiert ist, wobei das Verfahren die folgenden Schritte enthält:

a) Identifizierung eines unerwünschten Ereignisses an einem gegebenen Standort des Stromnetzes, wobei das unerwünschte Ereignis einem kritischen Zustand des Stromnetzes entspricht, der eine vorübergehende oder andauernde, teilweise oder vollständige Nichtverfügbarkeit der elektrischen Energie im Bereich der gegebenen Standorts herbeiführt

b) Durchlauf ausgehend von dem gegebenen Standort mindestens einer Teileinheit, die elektrische Geräte der Vielzahl von elektrischen Geräten des Stromnetzes enthält;

c) Identifizierung eines elektrischen Geräts der im Schritt b) durchlaufenen Teileinheit des Stromnetzes;

d) Bestimmung einer Liste von dem identifizierten elektrischen Gerät zugeordneten befürchteten Ereignissen, die das unerwünschte Ereignis herbeiführen können, wobei die befürchteten Ereignisse je Ursachen entsprechen, die zu einem Ausfall oder einer Funktionsstörung für das identifizierte elektrische Gerät führen und alleine oder in Kombination das unerwünschte Ereignis herbeiführen können;

e) Bestimmung eines dem identifizierten elektrischen Gerät zugeordneten Werts vollständiger Nichtverfügbarkeit unter Berücksichtigung der Nichtverfügbarkeitsrate und der Reparaturzeiten, die jeweils jedem befürchteten Ereignis der Liste befürchteter Ereignisse zugeordnet sind;

f) Wiederholung der Schritte b) bis e), wobei das Verfahren unterbrochen wird, wenn eine vordefinierte Anzahl höher als oder gleich zwei elektrischer Schutzgeräte in der Teileinheit durchlaufen wurden; und

g) Berechnung eines Zuverlässigkeitszustands des Stromnetzes ausgehend von den vollständigen Nichtverfügbarkeitswerten, die den durchlaufenen elektrischen Geräten zugeordnet sind.

2. Verfahren nach Anspruch 1, wobei mindestens ein elektrisches Gerät des Stromnetzes unter einem Transformator, einem Schalter, einem Schutzschalter, einem Schütz, einem Trennschalter, einer Sammelschiene, einer Batterie, einem Schutzrelais, einer Überwachungsausrüstung, einer Kontrollausrüstung und einer Telekommunikationsausrüstung ausgewählt wird.

3. Verfahren nach einem der vorhergehenden Ansprüche, wobei das Stromnetz mindestens ein reales elektrisches Gerät und mindestens ein virtuelles elektrisches Gerät enthält, wobei das virtuelle elektrische Gerät konfiguriert ist, eine Beziehung zwischen Elementen des Stromnetzes zu modellisieren.

4. Verfahren nach Anspruch 3, wobei das Verfahren unterbrochen wird, wenn ein virtuelles elektrisches Gerät im Schritt c) des Verfahrens identifiziert wird.

5. Verfahren nach einem der vorhergehenden Ansprüche, wobei der gegebene Standort des Stromnetzes einem Standort einer Sammelschiene entspricht.

6. Verfahren nach einem der vorhergehenden Ansprüche, wobei der Durchlauf der Teileinheit ausgehend vom gegebenen Standort stromaufwärts, d.h. in Richtung mindestens einer Quelle elektrischer Energie des Stromnetzes, und/oder stromabwärts, d.h. in Richtung mindestens einer elektrischen Last des Stromnetzes durchgeführt wird.

7. Computerprogramm, das Anweisungen enthält, die, wenn das Programm von einem Prozessor ausgeführt wird, dazu führen, das Verfahren nach einem der Ansprüche 1 bis 6 durchzuführen.

8. Verarbeitungsvorrichtung, auf der ein Computerprogramm gespeichert ist, das Anweisungen zur Durchführung des Verfahrens nach einem der Ansprüche 1 bis 6 enthält.

## Claims

1. Method for determining a reliability state of an electrical network (1), the electrical network comprising a plurality of interconnected electrical devices (T1, Util, JDB1, D1), the electrical network being modelled by a single-line representation, the method comprising the following steps:

a) identifying an undesired event at a given location in the electrical network, the undesired event corresponding to a critical state of the electrical network resulting in partial or total, temporary or permanent unavailability of electrical power at the given location;

b) traversing at least one subset comprising electrical devices of the plurality of electrical devices of the electrical network starting from the given location;

c) identifying an electrical device of the subset of the electrical network traversed in step b);

d) determining a list of events of concern that are associated with the identified electrical device and could result in the undesired event, the events of concern corresponding respectively to causes leading to a failure or malfunction for the identified electrical device and likely to result, alone or in combination, in the undesired event;

e) determining a total unavailability value associated with the identified electrical device taking into account the unavailability rates and the repair times respectively associated with each event of concern in the list of events of concern;

f) repeating steps b) to e), the method being interrupted once a predefined number, which is greater than or equal to two, of electrical protection devices have been traversed in the subset; and

g) calculating a reliability state of the electrical network on the basis of the total unavailability values respectively associated with the traversed electrical devices.

2. Method according to Claim 1, wherein at least one electrical device of the electrical network is chosen from among a transformer, a switch, a circuit breaker, a contactor, a disconnector, a busbar, a battery, a protection relay, monitoring equipment, control equipment and telecommunication equipment.

3. Method according to either one of the preceding claims, wherein the electrical network comprises at least one real electrical device and at least one virtual electrical device, the virtual electrical device being configured to model a relationship between elements of the electrical network.

4. Method according to Claim 3, wherein the method is interrupted once a virtual electrical device is identified in step c) of the method.

5. Method according to any one of the preceding claims, wherein the given location in the electrical network corresponds to a location of a busbar.

6. Method according to any one of the preceding claims, wherein, starting from the given location, the subset is traversed upstream, i.e. towards at least one electrical power source of the electrical network, and/or downstream, i.e. towards at least one electrical load of the electrical network.

7. Computer program comprising instructions which, when the program is executed by a processor, lead to the implementation of the method according to one of Claims 1 to 6.

8. Processing device on which a computer program comprising instructions for implementing the method according to one of Claims 1 to 6 is recorded.

[FIG. 1]

G

T1

JDB1

Util

D1

**FIG. 1**

CP1

[FIG. 2]

| Identification  évènement indésirable <u>100</u> |
| Parcours <u>101</u> |
| Appareil <u>102</u> |
| Liste d'évènements redoutés <u>103</u> |

Impact <u>104</u>

Evènement suivant <u>105</u>

| Indisponibilité <u>106</u> |

**FIG. 2**

| Suite du parcours <u>107</u> |

| Fiabilité <u>108</u> |

[FIG. 3]

**FIG. 3**

[FIG. 4]

**FIG. 4**

## RÉFÉRENCES CITÉES DANS LA DESCRIPTION

**Documents brevets cités dans la description**

- FR 2920893 A1

**Littérature non-brevet citée dans la description**

- **SAMUEL et al.** Fault Tree-Based Reliability Assessment of a 132-kV Transmission Line Protection Scheme. *American Journal of Engineering Research,* 2013, vol. 2 (10), 100-106